(19) Europäisches Patentamt
European Patent Office
Office européen des brevets

(11) **EP 4 292 753 A1**

(12) **EUROPEAN PATENT APPLICATION**

(43) Date of publication:
**20.12.2023 Bulletin 2023/51**

(51) International Patent Classification (IPC):
***B23K 26/70*** *(2014.01)*

(21) Application number: **22179343.3**

(52) Cooperative Patent Classification (CPC):
**B23K 26/707**

(22) Date of filing: **16.06.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bystronic Laser AG**
**3362 Niederönz (CH)**

(72) Inventor: **KALLEN, Benjamin**
**3362 Niederönz (CH)**

(74) Representative: **Frei Patent Attorneys**
**Frei Patentanwaltsbüro AG**
**Hagenholzstrasse 85**
**8050 Zürich (CH)**

(54) **DETERMINING THE DEGREE OF FOULING OF A TRANSMISSIVE ELEMENT**

(57) The present disclosure concerns a method of determining the degree of fouling of a transmissive element of a laser processing machine (for example a protective window facing the workpiece), through which transmissive element in use a laser beam is directed. The method comprises illuminating the transmissive element and taking an image (50), for example by a camera, of the illuminated transmissive element. The image will represent pollution of the transmissive element. The image is analyzed for calculating an optical element fouling value that is a quantitative measure of the degree of fouling. In this calculation, the distance of the pollution to an intersection position of the laser beam propagation axis through the transmissive element is taken into account in that the pollution is given a weight by that depends on the distance to the intersection position.

Fig. 9

# Description

The invention is in the field of industrial laser processing machines, for example laser cutting machines.

In laser material processing machines, a directed laser beam is caused to move relative to a workpiece to process the workpiece, for example to make a cut into the workpiece, to drill into the workpiece, to cause a local melting (for example for the purpose of fusing in a 3D printing process) or to locally modify the properties of the workpiece for any other purpose. The movement of the laser beam relative to the workpiece may be caused by a movement of a laser processing head that emits the laser beam or by a movement of the workpiece relative to a laser processing head, or both.

In such laser processing machines, the laser processing head, from which the laser beam is emitted, usually comprises a protective glass at the surface facing the workpiece, wherein the beam is emitted through the protective glass. The laser processing beam impinging on the workpiece may cause splashes of material or smoke or other emissions from the workpiece that may cause deposits on material surfaces. The protective glass ensures that such deposits are restricted to the surface of the protective glass and are prevented from getting into the interior of the laser processing head where they could potentially damage expensive equipment.

However, if the degree of fouling of a protective glass is too high, there are both, the risk that absorption and/or scattering of laser radiation leads to damages of equipment and that the quality of the processing suffers, for example because not a high enough percentage of the laser power is focused to the desired position.

Therefore, protective glasses need to be inspected regularly.

It has also been proposed to replace a visual inspection by the use of an illumination of the protective glass in combination with sensors (such as photodiodes) that detect scattered light. The higher the fouling, the more scattered light is detected. If for example a threshold value is reached, the protective glass needs cleaning or replacement.

However, not all kinds of fouling are equally detrimental. The prior art methods feature the disadvantage that they do not have any selectivity in this respect. As a consequence, either the threshold has to be set to a very low value, in which case often operation is unnecessarily interrupted or there remains a risk that a very detrimental fouling does not trigger any replacement or cleaning action.

It is an object of the present invention to provide a method and a machine for carrying out this method, which overcome drawbacks of the prior art and which yield a reliable approach of determining whether a transmissive element can still be used or whether the degree of fouling requires replacement or cleaning.

This object is achieved by a method and a machine as defined in the claims.

The method is a method of determining the degree of fouling of a transmissive element of a laser processing machine (for example a protective window facing the workpiece), through which transmissive element in use a laser beam is directed. It comprises illuminating the transmissive element and taking an image, for example by a camera, of the illuminated transmissive element. The image will represent pollution of the transmissive element. The image is analyzed for calculating an optical element fouling value that is a quantitative measure of the degree of fouling. In this calculation, the distance of the pollution to an intersection position of the laser beam propagation axis through the transmissive element is taken into account in that the pollution is given a weight that depends on the distance or the pollution to the intersection position.

In the present text, "illuminating" or "light" refers to the use of electromagnetic radiation of a kind that may be used to acquire an image by an according sensor, especially an optical camera. The light may especially be visible light, but also infrared electromagnetic radiation or radiation of other parts of the electromagnetic spectrum may be used. In embodiments, the light may be red light.

The transmissive element may be a protective glass plate. However, it is possible the transmissive element, especially protective glass, has a different or further function, in addition to the protection. For example, the transmissive element may have a surface with a dedicated shape so that it acts as a lens for the laser processing beam.

In embodiments, the step of illuminating comprises illuminating the transmissive element from sideways, i.e. in a nonzero angle to the laser beam propagation axis. Especially, illuminating may comprise illuminating in an angle of 90° plus minus 25°. Thereby, the light will go right through the transmissive element and will not lead to any camera signal, except for pollution.

In addition or as an alternative, the light may be caused to impinge from a direction roughly corresponding to the direction from which the laser processing beam is directed onto the transmissive element. For example, if the method is carried out in situ, i.e., with the transmissive element mounted to a laser processing head from which the laser processing beam is emitted for processing, then illumination may be carried out by light guided to the transmissive element in parallel to the laser processing beam. For example, cladding of a transport fiber, by which the laser processing beam is coupled into the laser processing head, may be used for an illuminating beam.

Rather in general, the method may be carried out in situ or ex situ. If the method is carried out in situ, the machine that is equipped for carrying out the method is the laser processing machine itself. Illumination may take place in breaks between laser processing steps, when the laser processing beam is temporarily switched off or otherwise stopped from impinging on the workpiece so that no glow from the workpiece can interfere with the image taking. However, it is not excluded that the method can be carried out simultaneously with laser processing, for example with the aid of frequency filtering, lock-in techniques or others to eliminate the influence of light coming from the workpiece.

For carrying out the method in situ, a camera mounted to the laser processing head may be used. Cameras in laser processing heads are already known in the field, especially for monitoring the workpiece, for example for the purpose of quality control. In machines having such a camera, the method may thus be carried out using this camera, with only rather small additional equipment being required.

As an alternative to being carried out in situ, the method may also be carried out ex situ, by a separate, for example dedicated machine that comprises at least a radiation source for the illuminating step and an image acquiring unit (camera).

In both variants, the analysis and calculating steps may be carried out using image processing software that may run on the machine or a separate, for example general-purpose, computer.

The step of acquiring an image may be carried out repeatedly. Especially, it may be carried out in regular intervals (if the method is carried out in situ) or always between successive processing steps, etc.

The step of analyzing may comprise identifying pollution. Pollution may comprise pollution particles distributed over the surface and/or a polluted surface area on the surface. The step of analysing may comprise counting pollution particles and/or determining a polluted surface area.

In a group of embodiments, the image of the transmissive element is fragmented into concentric zones, with the intersection position being in the center. Then, each zone may be assigned a pollution impact value, which value is for example the higher the closer the zone is to the center. The optical element fouling value may then be a sum of zone fouling values of each zone. The respective zone fouling value is a product (or other monotonous function) of the pollution impact value and of the pollution detected in the respective zone, for example the number of counted particles or the polluted surface area or the brightness of the light caused by the pollution, etc. Also combinations are possible in which the number of particles and the polluted surface area are added together, appropriately weighted, and the result is multiplied by the pollution impact value for obtaining the zone fouling value.

More in general the optical element fouling value may be a weighted sum of optical signal portions from different parts of the image, wherein weight depends on the distance to the intersection position and may be a monotonous function of this distance (the value being lower or equal for greater distances).

In this, or in other embodiments, as an alternative to counting particles and/or determining the polluted surface area also other properties of the taken image may be used, such as the brightness (to be more specific, the power from a zone or the intensity ("radiosity")). The latter concept is based on the often at least approximately correct assumption that the contribution of the particular pollution to the image will be the higher the more it interacts with the illuminating radiation, and if the interaction with the illuminating radiation is pronounced, so will be the interaction with portions of the laser processing beam, which traverses the transmissive element.

In a most basic embodiment, the weight given to pollution represented on the image corresponds to a mere distinction between pollution within a region with radius ro around the intersection point and pollution outside of this range, wherein $r_0$ may be a value adapted to the diameter d of the laser processing beam on at the axial position of its traversal through the transmissive element. Thus, in the most simple embodiment $w(r)=\Theta(r_0-r)$ with $\Theta$ being the Heaviside step function. The diameter d (with for example ro=d/2 or a value that is above d/2 by a certain percentage or similar) may depend on the actual laser processing parameters and may be adapted thereto. An adaptation of ro may be carried out automatically, by the software, if the machine by which the method is carried out is the laser processing machine itself. In such a situation, the method may comprise outputting a warning to the operator in case due to a change of processing parameters (for example a stronger focussing or a defocussing of the laser processing beam) the optical element fouling value is caused to be raised above a threshold.

In addition to concerning a method, the present invention also concerns a machine for carrying out the method. The machine may be the laser processing machine itself, which comprises the transmissive element and is equipped to carry out the method. Alternatively, the machine may be a separate machine relative to which the transmissive element may be mounted for carrying out the method. In both cases, the machine comprises a light source for illuminating an image acquiring unit (camera) for acquiring the image and electronics for carrying out the analyzing and calculating steps.

The machine is a laser cutting machine and comprises a laser cutting head, a laser source and a workpiece support, as well as a supply for a cutting gas that is emitted from a laser machining nozzle of the laser cutting head. The laser cutting machine may comprise parameters, stored in a memory to which a machine control software has access, for cutting workpieces, for example of steel. These parameters may comprise parameters that cause the laser source to emit pulsed radiation with the parameters described in the present text. The pulsed radiation may especially be generated in the quasi-CW-mode. Thus, the machine is equipped and programmed to carry out the method according to any embodiment described and claimed in this text.

Hereinafter, embodiments of the present invention are described in more detail referring to drawings. In the drawings, same reference numbers refer to same or similar components. They show:

Fig. 1:          a laser processing machine;

Fig. 2           a laser processing head;

Fig. 3           a variant of the laser processing head;

Fig. 4           a dedicated machine for carrying out the invention;

Figs. 5 and 6    examples of polluted transmissive elements;

Figs. 7 and 8    analyzed images of the transmissive elements of Figs. 5 and 6;

Figs. 9 and 10   the images of Figs. 7 and 8 together with concentric zones; and

Fig. 11          an example of a continuous weight function w(r).

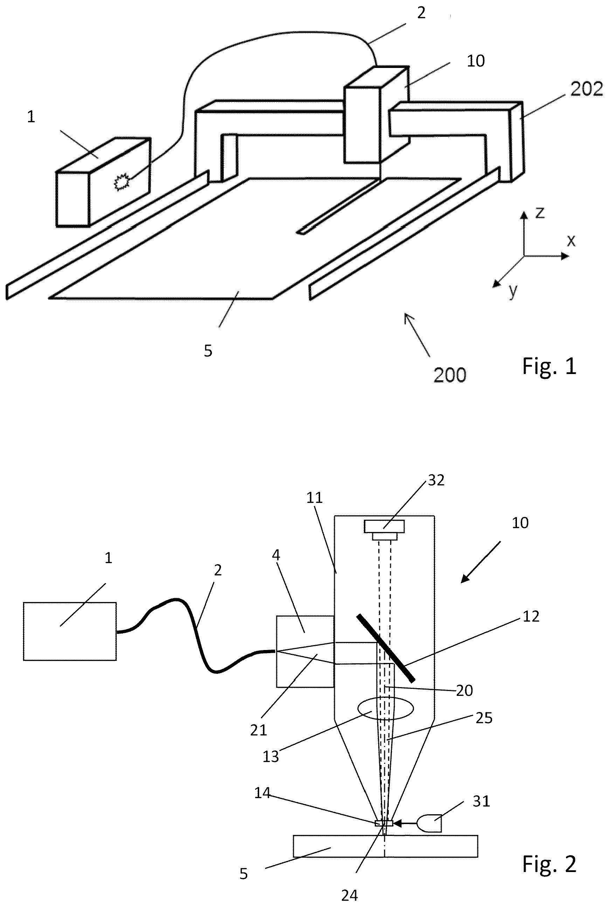

**Figure** 1 shows an example of a laser cutting machine 200. The machine comprises a laser 1, a transport fiber 2, a laser cutting head being an example of a laser processing head 10, and a laser processing head moving mechanism. A workpiece 5 is supported by a working table (not shown). The laser processing head moving mechanism comprises a bridge 202 relative to which the laser processing head 10 is movable in x direction), and which itself is movable, for example on a pair or rails, in y direction relative to the working table and the workpiece 5. The workpiece 5 may be a metal sheet that is cut by a laser processing beam emitted by the laser cutting head.

In alternative embodiments, the laser processing machine may be different from a laser cutting machine, and/or the workpiece may be different from a metal sheet. The present invention does not depend on the way the laser beam emitted the laser processing head interacts with the workpiece.

**Figure 2** schematically depicts a laser processing head 10. The laser processing beam 21 produced by the laser 1 is coupled into the laser processing head via the transport fiber 2 and a fiber outcoupling optics 4. In the embodiment of Fig. 2, the laser processing head 10 comprises, arranged within its casing 11, a partially transparent, for example dichroic mirror 12. The partially transparent mirror 12 reflects at least a portion of the laser radiation onto a path that leads through a focusing optics 13 and a transmissive element 14 being a protective plate along a laser beam propagation axis 20, onto the workpiece 5. The intersection position 24 is the position at which the laser beam propagation axis 20 intersects the transmissive element 14.

In alternative embodiments, the focusing optics 13, if present, could be at least partially arranged before the partially transparent mirror 12, be at least partially constituted by the transmissive element 14 (which then may have a curved surface) and/or be at least partially constituted by the partially transparent mirror 12 (which then may be curved).

The laser processing head further comprises a light source 31, for example an LED or a laser diode arranged to couple light into the transmissive element 14, for example by illuminating it from a nonzero angle to the axis 20. In the depicted embodiment, the light source 31 illuminates the transmissive element in a right angle to the laser beam propagation axis 20.

Further, the laser processing head 10 comprises a camera 32 that is directed onto the transmissive element 14 so that it is viewed from the direction parallel to the laser beam propagation axis 20, i.e. light 25 radiating from the transmissive element 14 - for example due to scattering - back into roughly the direction of the laser beam propagation axis 20 is captured by the camera 32. To this end, the partially transparent mirror 12 is at least partially transparent for radiation of wavelengths emitted by the light source 31.

For example, the partially transparent mirror may be reflective for the laser processing beam 21 but transparent for the radiation emitted by the light source 31.

Because the light is coupled into the transmissive element from sideways (in an angle of about 90°), it will go right through the transmissive element and will not lead to any camera signal, except for pollution. Thus, what the camera picks up is an image of the pollution of the transmissive element 14.

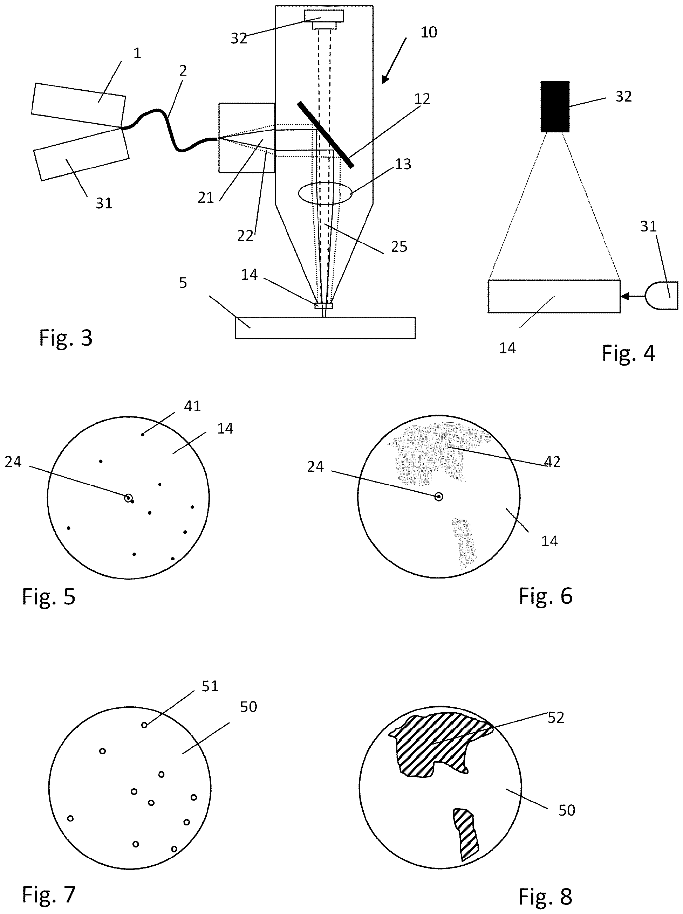

**Figure 3** shows a variant of the embodiment of Fig. 2, in which instead of a light source directly coupling light from sideways into the transmissive element 14, a second laser is used as the light source 31. The illumination radiation 22 from the second laser may have a different wavelength than the laser processing beam 21. It may be coupled into the transport fiber 2 - for example into the cladding of the transport fiber - or alternatively a second fiber may be used. In embodiments, the illumination radiation 22 is less focused than the laser processing beam 21 so that it illuminates a larger portion of the transmissive element than just the region that is traversed by the laser processing beam.

In these embodiments, the partially transparent mirror 12 will be partially transparent for the illumination radiation, so that a portion thereof is deflected onto the transmissive element 14 but a portion of the light thrown back by the transmissive element gets to the camera.

In a still further variant (not shown in Fig. 3), the light by the second laser is directed, using a separate fiber, onto the surface of the transmissive element directly along the laser beam propagation axis or from a small acute angle to the laser beam propagation axis 20. For example, the illumination radiation may be coupled out of the separate fiber immediately adjacent the camera 32.

**Figure 4** illustrates the possibility that the method of determining a degree of fouling is carried out offline, on a separate station. The set-up with the light source 31 illuminating the transmissive element 14 from sideways and a camera 32 viewing from the direction parallel to the laser beam propagation axis is comparable to the set-up described referring to Fig. 2.

**Figure 5** shows an example of a transmissive element 14 stained by small pollution particles 41, whereas **Figure 6** depicts a transmissive element with a pollution film 42 covering parts of the surface area. Both, Fig. 5 and Fig. 6 also illustrates a central point marking the intersection position 24 at which the laser beam propagation axis 20 intersects the transmissive element (see also Fig. 2).

**Figures 7 and 8** show, for the examples of Figs. 5 and 6, respectively, the results of the image analysis of the image 50 taken by the camera. The pollution particles are identified and are assigned to their positions 51 (Fig. 7), whereas the pollution film is assigned a polluted area 52.

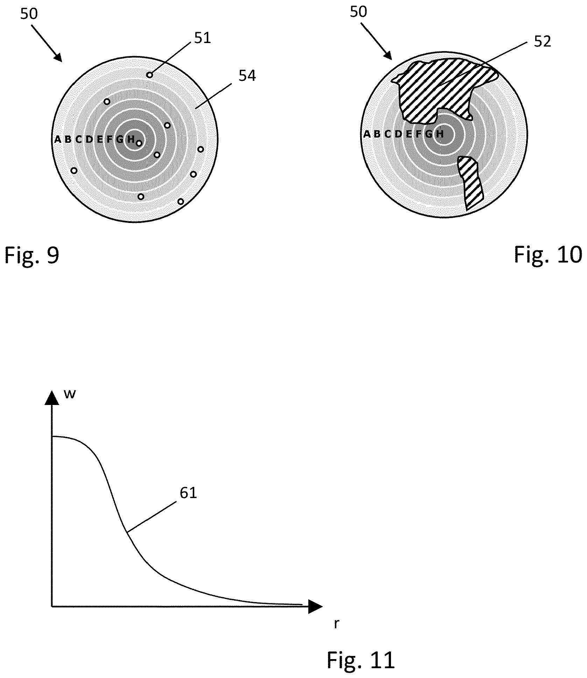

**Figures 9 and 10,** show, for the situations of Fig. 5/Fig. 7 and of Fig. 6/Fig. 8, respectively, the approach of fragmenting the image 50 into zones A.-H. that are concentric to the intersection position. Each zone is assigned a position impact value. For example, the outermost zone A may be assigned position impact value 1, the next zone B the position impact value 2, then 3, 4, ...

The zone fouling value in Fig. 9 is then for example the product of the position impact value of the particular zone multiplied by the number of pollution particles in that zone. The transmissive element fouling value is then the sum of the zone fouling values of all zones.

In Fig. 10, the zone fouling value is the product of the position impact value of the particular zone multiplied by the polluted surface area covered by the pollution film in that zone. The transmissive element fouling value is then again the sum of the zone fouling values of all zones.

Clearly, due to this approach pollution particles or polluted surface area portions are weighted more heavily if they are closer to the intersection position (the center in the depicted embodiments) so that pollution that affects the laser processing beam more strongly weights more heavily when the transmissive element fouling value is calculated.

**Figure 11** very schematically shows an example of a continuous pollution impact function 61 that defines a weight w as a function of the distance r to the intersection position. The pollution impact function can for example reflect the expected intensity distribution of the laser processing beam in the transmissive element or be any other function that gives positions close to the intersection point a higher weight than positions further away from it. In an example, the pollution impact function can be approximately Gaussian. In another example, the function is linear, i.e., w=a-b*r, where a>0 and b>0 are parameters. For particle-like pollutions as in Fig. 5/Fig. 7, the optical element fouling value F is then calculated as $F = \sum_{i=1}^{n} w(r_i)$, with $r_i$ is the distance of the $i^{th}$ particle to the intersection point. For pollution films, the fouling value follows from an integration over the polluted area portions $A_p$ (only): $F = \int_{A_p} w(r) dA$.

If the transmissive element may have both, pollutions in the form of particles and in the form of a film, for calculating the optical element fouling value, the according fouling values for particles and for films may just be added, with appropriate scaling factors.

Especially in configurations where the impact is not symmetrical about the laser beam propagation axis, the above-described approaches can be accordingly adapted: If zones are used, as illustrated in Figs. 9 and 10, then in these embodiments need not have an circular/annular shape but can have other shapes. If a continuous pollution impact function is used, the function can be a function of two dimensions w=w(x, y).

It is also possible to further develop any one of the above approaches to deal with the situation that particle pollutions may have different sizes and/or with the situation that a pollution film may bring about different degrees of shading, for example by having different thicknesses. For example, in the case of polluting particles, the fouling value may be determined as a sum:

$$F = \sum_{i=1}^{n} s_i w(r_i)$$

, where $s_i$ represents the size of each particle. In analogy $F = \int_A I(x,y)w(r) dA$, where $I(x, y)$ is the intensity of the optical signal (representative of the thickness of the polluting film) at a particular position x,y.

**Claims**

1. Method of determining the degree of fouling of a transmissive element (14) of a laser processing machine, wherein the laser processing machine is configured for the transmissive element (14) to be intersected by a laser beam propagation axis (20) at an intersection position (24), the method comprising the steps of:

   • illuminating the transmissive element (14);
   • taking an image (50) of the illuminated transmissive element (14), wherein the image represents pollution of the transmissive element;
   • Analyzing the image and calculating an optical element fouling value being a quantitative measure of a degree of fouling of the transmissive element (14);
   • wherein in the step of calculating the optical element fouling value, pollution represented in the image is given a weight that depends on a distance of the pollution to the intersection position (24).

2. The method according to claim 1, wherein the step of illuminating comprises illuminating in a nonzero angle to the laser beam propagation axis (20), the angle preferably being 90° +/-25°.

3. The method according to claim 1 or 2, wherein the steps of illuminating and of taking the image (50) are carried out while the transmissive element is mounted to a laser processing head (10) that is equipped to emit the laser beam onto a workpiece (5), the transmissive element (14) being a protective glass of the laser processing head.

4. The method according to any one of the previous claims, wherein the step of taking an image (50) is carried out repeatedly with an image acquiring unit (32).

5. The method according to any one of the previous claims, wherein the step of analyzing comprises the sub-step of counting pollution particles (41) and/or determining a polluted surface area (42).

6. The method according to any one of the previous claims, wherein the step of analyzing comprises the sub-step of fragmenting the image (50) into zones (A-H) concentric to the intersection position, and wherein the step of calculating comprises assigning a pollution impact value to each zone.

7. The method according to claim 6, wherein the step of analyzing comprises the further sub-step of counting pollution particles (41) and/or determining a polluted surface area (42) in each zone, and wherein the step of calculating the optical element fouling value comprises the sub-steps of calculating a zone fouling value for each zone, the zone fouling value being a monotonous function of the number of pollution particles and/or the polluted surface area of the respective zone, as well as of the pollution impact value of the respective zone.

8. The method according to any one of the previous claims, wherein the step of calculating comprises calculating the optical element fouling value as a weighted sum of a number of pollution particles and/or a weighted polluted surface area, wherein a weight is higher for particles and/or area portions, respectively, at positions closer to the intersection position (24) than for particles and/or area portions further away from the intersection position.

9. A machine for carrying out the method according to any one of the previous claims, comprising a light source (31) for illuminating the transmissive element (14), an image acquiring unit (32) for taking the image and electronics equipped and programmed to carry out the analyzing and calculating steps.

10. The machine according to claim 9 being the laser processing machine comprising a laser processing head (10) that comprises the transmissive element (14).

Fig. 1

Fig. 2

Fig. 3

Fig. 4

Fig. 5

Fig. 6

Fig. 7

Fig. 8

Fig. 9

Fig. 10

Fig. 11

EP 4 292 753 A1

| | | Europäisches Patentamt<br>European Patent Office<br>Office européen des brevets | **EUROPEAN SEARCH REPORT** | Application Number<br>EP 22 17 9343 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2020 131980 A1 (AUDI AG [DE]) 2 June 2022 (2022-06-02) * paragraphs [0017], [0018]; claims; figure * ----- | 1-10 | INV.<br>B23K26/70 |
| A | US 2019/242832 A1 (BINSWANGER MARTIN [DE] ET AL) 8 August 2019 (2019-08-08) * claims; figures * ----- | 1-10 | |
| A | DE 10 2014 203798 A1 (VOLKSWAGEN AG [DE]) 3 September 2015 (2015-09-03) * claims; figures * ----- | 1-10 | |
| | | | **TECHNICAL FIELDS SEARCHED (IPC)**<br><br>B23K |

The present search report has been drawn up for all claims

| Place of search | Date of completion of the search | Examiner |
|---|---|---|
| Munich | 12 December 2022 | Caubet, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 17 9343**

This annex lists the patent family members relating to the patent documents cited in the above-mentioned European search report.
The members are as contained in the European Patent Office EDP file on
The European Patent Office is in no way liable for these particulars which are merely given for the purpose of information.

**12-12-2022**

| Patent document cited in search report | Publication date | Patent family member(s) | Publication date |
|---|---|---|---|
| DE 102020131980 A1 | 02-06-2022 | NONE | |
| US 2019242832 A1 | 08-08-2019 | CN 110125534 A | 16-08-2019 |
| | | DE 102018102828 A1 | 08-08-2019 |
| | | US 2019242832 A1 | 08-08-2019 |
| DE 102014203798 A1 | 03-09-2015 | NONE | |

EPO FORM P0459

For more details about this annex : see Official Journal of the European Patent Office, No. 12/82